(19) Europäisches Patentamt
European Patent Office
Office européen des brevets

(11) **EP 1 768 069 A1**

(12) **EUROPEAN PATENT APPLICATION**

(43) Date of publication:
**28.03.2007 Bulletin 2007/13**

(51) Int Cl.:
***G06T 11/00*** *(2006.01)*

(21) Application number: **06121153.8**

(22) Date of filing: **22.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **26.09.2005 JP 2005277805**

(71) Applicant: **CANON KABUSHIKI KAISHA**
**Ohta-ku**
**Tokyo 146-8501 (JP)**

(72) Inventor: **Matsuura, Tomohiko**
**Ohta-ku**
**Tokyo (JP)**

(74) Representative: **Sharp, Alan Cooper**
**Canon Europe Ltd.**
**European Patent Department**
**6 Roundwood Avenue**
**Stockley Park**
**Middlesex, Uxbridge UB11 1JA (GB)**

(54) **Method of processing radiographic image and processing apparatus**

(57) Frame image data sets obtained in sequence by computer tomographic (CT) imaging, and a difference value between pixel values of corresponding pixels in two consecutive frames included in the frame image data sets. Then, the difference value is compared with a threshold value. If the difference value is smaller than the threshold value, the CT imaging is continued, whereas if the difference value is greater, it is determined reimaging is required. Then, operation is completed. If it is determined that CT imaging is to be continued, it is determined whether or not all projected images scheduled to be obtained are obtained. If not, the subsequent frame is obtained, and the step of computing the difference value and the subsequent steps are repeated. It is determined that all projected images to be obtained are obtained, a CT image is reconstructed from the frame image data sets. Then, the operation is completed.

FIG. 3

EP 1 768 069 A1

**Description**

BACKGROUND OF THE INVENTION

Field of the Invention

The present invention relates to a method of processing radiographic images and a processing apparatus for obtaining a computerized tomographic (CT) image by obtaining a plurality of image data sets of images captured using a two-dimensional X-ray sensor and then carrying out processing for reconstructing the CT image of an object.

Description of the Related Art

When carrying out radiographic computerized tomography (CT) imaging, if the subject moves, the correlation between the obtained data sets will be interrupted. As a result, the processing of reconstructing the CT image will be interfered with, and a desirable CT image cannot be obtained.

To cope with such a problem, in a typical CT imaging apparatus, the CT image obtained by carrying out computerized tomography is displayed on a monitor so that whether or not re-imaging is required can be determined on the basis of the quality of the displayed image.

As methods of determining whether or not re-imaging is required, for example, a method in which the operator carries out visual judgment, a method in which the CT apparatus automatically carries out determination based on the quality of the CT image, and, furthermore, a method combining the two former methods are known. Japanese Patent Laid-Open No. 2002-365239 described a method in which the operator judges the validity of various predetermined parameters from the quality of a CT image displayed for preview and, if the parameters are judged to be invalid, the operator changes the parameters and instructs re-imaging.

There is a method for determining whether or not re-imaging is required on the basis of a CT image generated by carrying out processing of reconstructing the CT image. However, with this method, all sets of image data required for the processing of reconstructing the CT image must be collected before reconstructing the CT image. Therefore, the determination for whether or not re-imaging is required is delayed.

According to the method in which the operator carries out visual judgment, the judgment process carried out by the operator becomes complicated.

SUMMARY OF THE INVENTION

The present invention mitigates the above-identified problems by determining whether or not re-imaging is required while computerized tomographic imaging is being carried out. In other words, a step of detecting information on the movement of a subject's body in the image data sets obtained in sequence while carrying out computerized tomographic imaging is provided to enable the radiographic image processing apparatus and the method of processing radiographic images according to the present invention to determine whether or not re-imaging is required before the CT imaging is completed.

According to a first aspect of the present invention, there is provided a radiographic imaging method as specified in claims 1 to 4.

According to a second aspect of the present invention, there is provided a radiographic imaging apparatus as specified in claim 6.

Other feature and advantage of the present invention will be apparent from the following description taken in conjunction with the accompanying drawings, in which like reference characters designate the same or similar parts throughout the figures thereof.

BRIEF DESCRIPTION OF THE DRAWINGS

The accompanying drawings, which are incorporated in and constitute a part of the specification, illustrate embodiments of the invention and, together with the description, serve to explain the principle of the invention.

Fig. 1 is a block circuit diagram according to a first embodiment.

Fig. 2 illustrates a projected image.

Fig. 3 is a processing flow chart.

Fig. 4 is a block circuit diagram according to a second embodiment.

Fig. 5 is a processing flow chart.

Fig. 6 is a block circuit diagram according to a third embodiment.

Fig. 7 is a processing flow chart.

DESCRIPTION OF THE EMBODIMENTS

First Embodiment

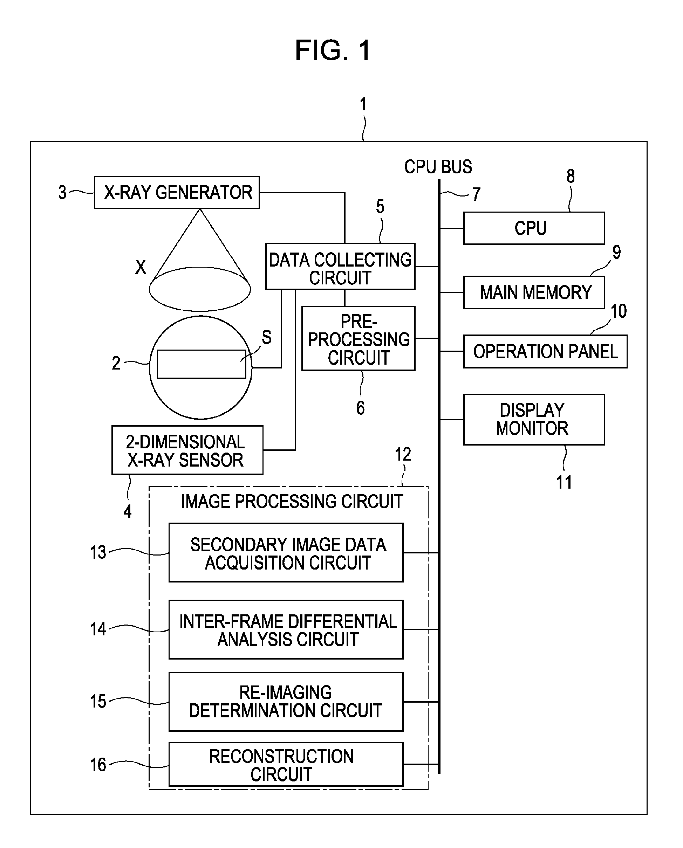

Fig. 1 illustrates a computerized tomography (CT) imaging device 1 having a function of determining whether or not re-imaging is required before a CT imaging process is completed, on the basis of image data sets obtained in sequence while CT imaging is being carried out. A subject S on a rotary device 2 is interposed between an X-ray generator 3 and a two-dimensional X-ray sensor 4. The rotary device 2, the X-ray generator 3, and the two-dimensional X-ray sensor 4 are electrically connected to a data collecting circuit 5.

The data collecting circuit 5 is electrically connected to a pre-processing circuit 6. The data collecting circuit 5 and the pre-processing circuit 6 are connected to a CPU bus 7. The CPU bus 7 is connected to a CPU 8, a main memory 9 including various data sets and a work memory, an operation panel 10 for operating the entire apparatus, a display monitor 11, and an image processing circuit 12.

The image processing circuit 12 includes a secondary image data acquisition circuit 13 configured to obtain, in sequence, image data sets processed by the pre-processing circuit 6 while CT imaging is being carried out, an inter-frame differential analysis circuit 14 configured to generate a difference value corresponding to the difference between pixel values of corresponding pixels in two consecutive frames included in the obtained image data sets, a re-imaging determination circuit 15 configured to determine whether re-imaging is required on the basis of the difference value between the two consecutive frames, and a reconstruction circuit 16 configured to reconstruct a CT image from a plurality of image data sets.

The pre-processing circuit 6, the CPU 8, the main memory 9, the operation panel 10, the display monitor 11, and the image processing circuit 12 are capable of sending and receiving data among each other via the CPU bus 7.

Various data sets required for the processing carrying out by the CPU 8 are stored in the main memory 9. The main memory 9 also has a work memory required for the processing carrying out by the CPU 8. The CPU 8 employs an operation sequence stored in the main memory 9 to control the operation of the entire apparatus in accordance with the operation instructions from the operation panel 10.

First, the rotary device 2 is activated to control the X-ray generator 3 configured to continuously or discontinuously emit X-ray beams while rotating the subject S disposed on the rotary device 2. Then, an X-ray beam emitted from the X-ray generator 3 is incident on the subject S and is transmitted through the subject S, reaching the two-dimensional X-ray sensor 4. Accordingly, the two-dimensional X-ray sensor 4 outputs image data of the X-ray image transmitted through the subject S.

Since imaging operation is carried out continuously, the two-dimensional X-ray sensor 4 obtains X-rays images in sequence while carrying out CT imaging and sends the corresponding image data sets in sequence to the data collecting circuit 5. For example, primary image data sets corresponding to 512 frames are sent to the data collecting circuit 5 while rotating the subject S by 360 degrees.

The data collecting circuit 5 converts the primary image data sets into image data signals and sends the image data signals to the pre-processing circuit 6. The pre-processing circuit 6 carries out pre-processing, such as offset correction processing and gain correction processing, on the primary image data signals from the data collecting circuit 5. Secondary image data signals obtained by carrying out pre-processing with the pre-processing circuit 6 are transferred to the main memory 9 and the image processing circuit 12 via the CPU bus 7 under the control of the CPU 8.

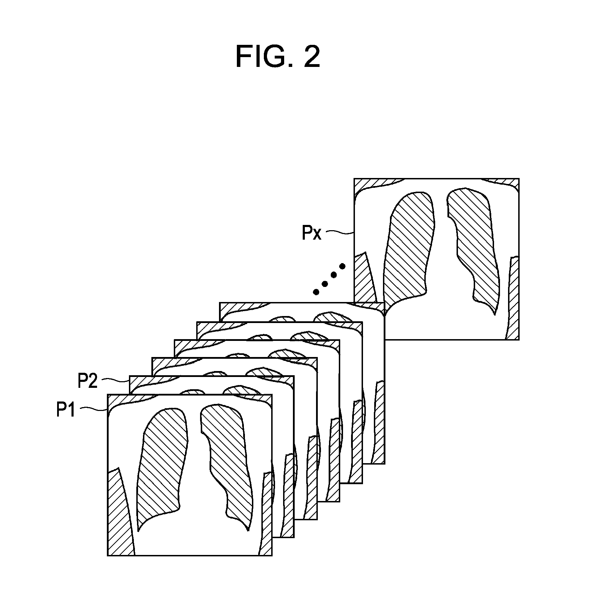

Accordingly, as shown in Fig. 2, secondary image data sets P1 to Px corresponding to the frames captured from different angles as the rotary device 2 is rotated are transferred, in sequence, to the image processing circuit 12. In synchronization with this, the secondary image data sets P1 to Px corresponding to the frames are transferred, in sequence, to and stored in the main memory 9. According to the first embodiment, the two-dimensional X-ray sensor 4, the data collecting circuit 5, and the pre-processing circuit 6 are provided separately. However, these circuits may be provided as a single sensor unit. Furthermore, the two-dimensional X-ray sensor 4, the data collecting circuit 5, and the pre-processing circuit 6 may be connected to each other via a network.

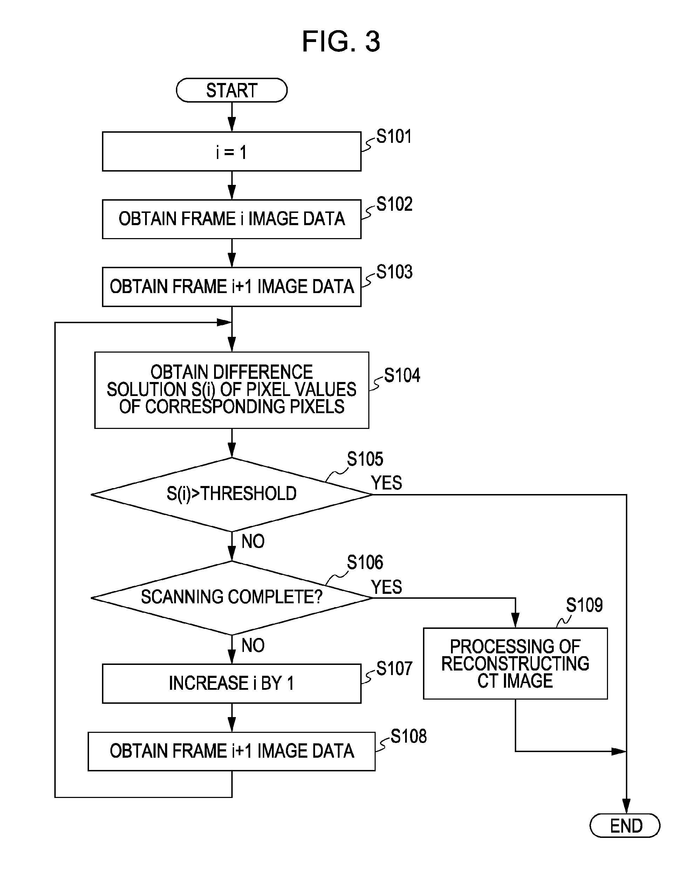

Fig. 3 is a flow chart illustrating the process carried out by the image processing circuit 12 according to the first embodiment. A program code in accordance with this flow chart is stored in the main memory 9 or a read only memory (ROM), not shown in the drawings, and are read out and executed by the CPU 8.

When CT imaging begins, first, the secondary image data acquisition circuit 13 obtains, in sequence, a first secondary image data set P1 and a second secondary image data set P2 through the CPU bus 7 from the pre-processing circuit 6 where pre-processing is carried out (Steps S101 to S103). Then, the inter-frame differential analysis circuit 14 analyzes the pixel values of corresponding pixels in the two consecutive frames. In this way, the difference value s(1) between pixel values of corresponding pixels in two consecutive frames is obtained for the first secondary image data set P1 and the second secondary image data set P2 (Step S104). More specifically, for example, as represented by expression 1, the difference value s(1) is obtained by determining the sum of the differences between corresponding pixel values included in the projected image.

$$S(1)=\Sigma\,|\,f1(x,y)-f2(x,y)\,| \qquad\qquad (1)$$

Subsequently, the re-imaging determination circuit 15 operates to compare the difference value s(1) between pixel values of corresponding pixels in two consecutive frames and a predetermined threshold value. If s(1) is smaller than the threshold value, CT imaging is continued, whereas if s(1) is greater than the threshold value, it is determined that re-imaging is required (Step S105). Then, the operation of the image processing circuit 12 is completed.

In Step S105, if it is determined that CT imaging is to be continued, then, it is determined whether or not all secondary image data sets scheduled to be obtained are obtained (Step S106). If all data sets are not obtained, the subsequent frame is obtained (Steps S107 to S108), and the difference between pixel values of corresponding pixels in two consecutive frames is analyzed (Step S104). Subsequently, the steps are repeated. The amount of processing time required for repeating the steps may be less than the amount of time that elapses from moment the data collecting circuit 5 obtains a primary image data set during CT imaging to the moment the data collecting circuit 5 obtains the subsequent primary image data set or, in other words, the inverse of the imaging frame rate.

In the above-described Step S106, if all secondary image data sets scheduled to be obtained are obtained, a CT image is reconstructed from the secondary image data sets P1 to Px by the reconstruction circuit 16 (Step S109). Then, the operation of the image processing circuit 12 is completed. Since the method of obtaining a CT image group from an image data group by employing processing of reconstructing a CT image is well known, description thereof is omitted here.

According to the first embodiment, the subject S is rotated with the rotary device 2. However, in contrast, the X-ray generator 3 and the two-dimensional X-ray sensor 4 may be rotated around the subject S. In either case, the same advantages are provided.

According to the first embodiment, since whether or not re-imaging is required is determined by using projection images obtained in sequence while carrying out CT imaging, the time conventionally required for processing of reconstructing a CT image before determining whether or not re-imaging is required is not required. Thus, throughput of the computerized tomography is improved. Since whether or not re-imaging is required is determined on the basis of a clear criterion, the process of determining whether or not re-imaging is required can be automated, and the operator's workload can be lightened.

Second Embodiment

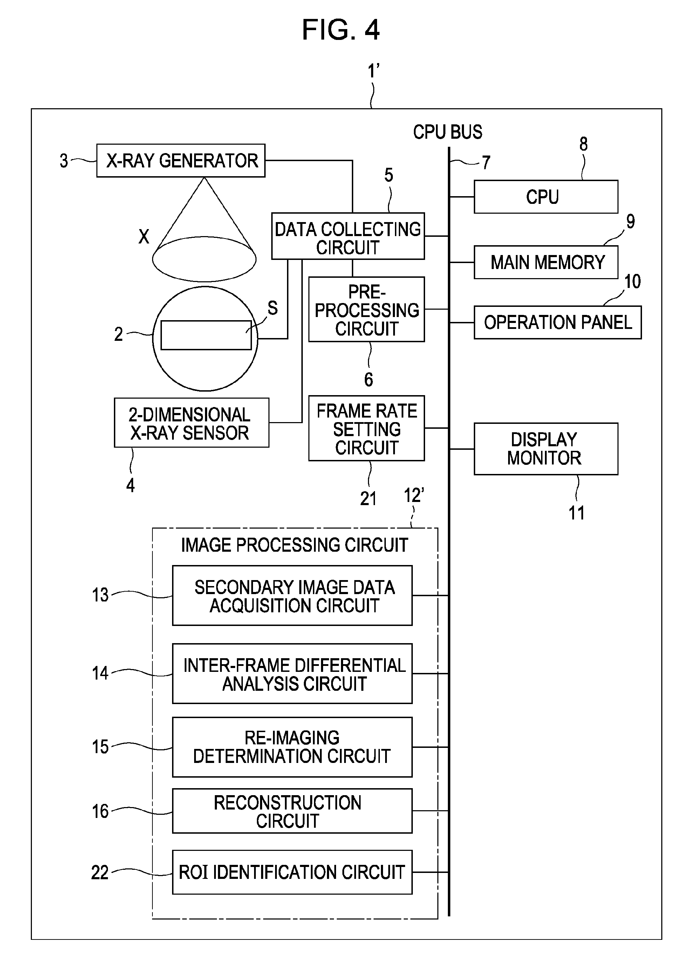

Fig. 4 is a block circuit diagram of a CT imaging device 1' according to a second embodiment. The CT imaging device 1' according to the second embodiment has the same structure as the CT imaging device 1 according to the first embodiment, except that a frame rate setting circuit 21 and an image processing circuit 12' having a region-of-interest (ROI) identification circuit 22 are added.

Similar to the first embodiment, the process from emitting X-ray beams X to transferring secondary image data sets is repeated continuously while the rotary device 2 of the CT imaging device 1' is rotated, and secondary image data sets obtained by carrying out CT imaging from different angles are transferred, in sequence, to the image processing circuit 12'. However, the image processing circuit 12' according to the second embodiment receives, in sequence, the secondary image data sets according to a frame rate fr set in advance by the frame rate setting circuit 21.

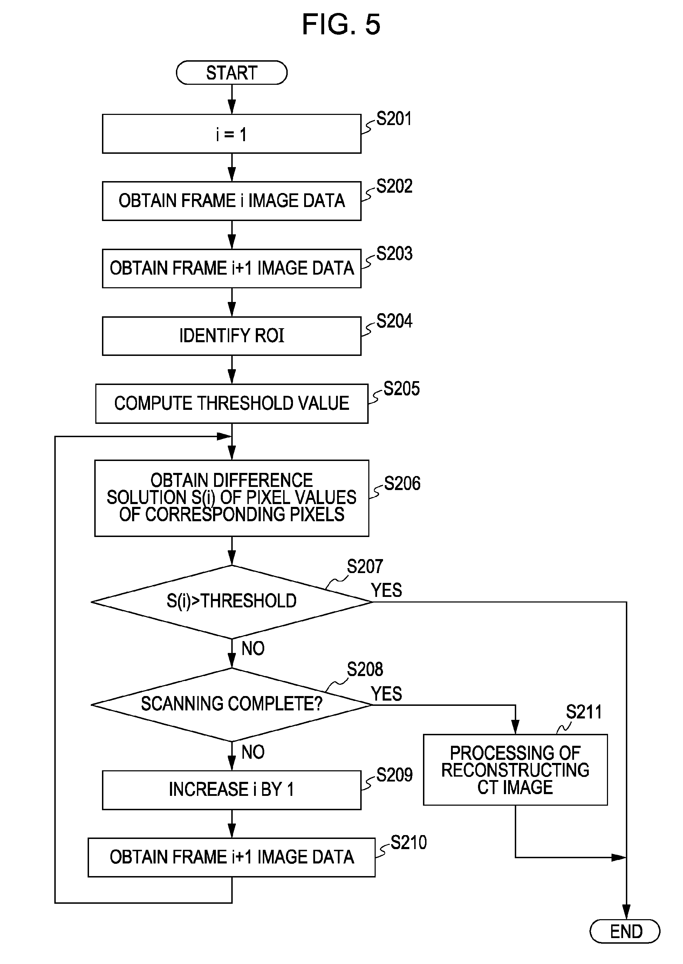

Fig. 5 is a flow chart of the processing carried out by the image processing circuit 12' according to the second embodiment. Similar to the first embodiment, when CT imaging begins, the secondary image data acquisition circuit 13 obtains, in sequence, a first secondary image data set P1 and a second secondary image data set P2 of a projected image from the pre-processing circuit 6, where pre-processing is carried out, via the CPU bus 7 (Steps S201 to S203).

Then, ROI identification is carried out on the obtained first secondary image data set P1 and/or the second secondary image data set P2 by the ROI identification circuit 22 (Step S204). With the second embodiment, only the chest region of the subject S is imaged, and the ROI is identified as the edge of the diaphragm that is an anthropotomical structure prominently representing the body movement of the subject S. As a method of identifying a specific anthropotomical structure, a technique for identify anatomical locations is well known. For example, Japanese Patent Laid-Open No. 11-151232 discusses a method of identifying a lung field by labeling a threshold-processed binary image, and, within the labeled fields, by identifying a field not including an area smaller than a predetermined value and the adjacent fields as the lung field.

For example, a method of segmenting anthropotomical structures by using a feature quantity to learn density information of pixels, anatomical address information, and entropy information of the periphery of the pixels through a neural network is discussed in "Automatic Segmentation of Anatomic Regions in Chest Radiographs using an Adaptive-Sized Hybrid Neural Network" (SPIE Medical Imaging 97).

According to the second embodiment, first, these methods are employed to identify the lung field, and then, the diaphragm is identified by taking into consideration the installation condition of the two-dimensional X-ray sensor 4.

More specifically, when the two-dimensional X-ray sensor 4 is installed so that the vertical direction of the subject S and the vertical direction of the projected image match, the diaphragm appears at the lower portion of the obtained projected images when a chest region image of the subject S is captured. The diaphragm can be identified on the basis of this limitation and the lung field identified above.

Subsequently, the re-imaging determination circuit 15 computes a threshold value th on the basis of the frame rate fr for obtaining the image data sets set by the frame rate setting circuit 21 (Step S205). The threshold value th is used for determining whether or not re-imaging is required. For example, a threshold function th(fr) may be set so that, as the frame rate fr increases, the threshold value th monotonically decreases. Since the difference between two consecutive frames is small when the frame rate fr is great, the computed threshold value th used for determining whether or not re-imaging is required is small. When the frame rate fr is small, the computed threshold value th is great.

Next, the inter-frame differential analysis circuit 14 is used to compute the pixel values of pixels corresponding in two consecutive frames for the identified ROI. For the ROI identified in Step S204, the difference value s(i) between the pixel values of the pixels corresponding in the first secondary image data set P1 and the second secondary image data set P2, which are two consecutive frames, is analyzed (Step S206). The method of analysis and the subsequent steps S207 to S211 are the same as those according to the first embodiment.

In this way, according to the second embodiment, a threshold value that is used for determining whether re-imaging is required is suitably set on the basis of the frame rate fr for the primary image data sets. Therefore, whether or not re-imaging is required is determined with high accuracy. Moreover, since the difference value for corresponding pixels in two consecutive frames is analyzed on the basis of only an area around the region that prominently represents the body movement of the subject S, whether re-imaging is required is determined with high accuracy.

Third Embodiment

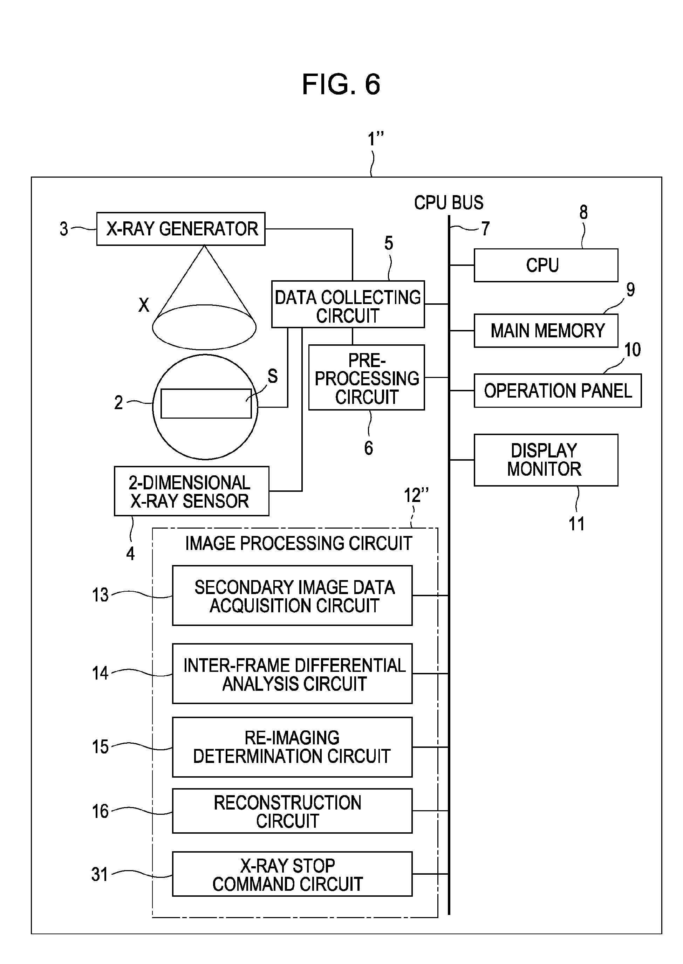

Fig. 6 is a block circuit diagram of a CT imaging device 1" according to a third embodiment. The CT imaging device 1" according to the third embodiment has the same structure as the CT imaging device 1 according to the first embodiment, except that an X-ray stop command circuit 31 configured to transmit an X-ray stop command signal immediately after an image processing circuit 12" determines that re-imaging is required is added.

Similar to the first embodiment, the process from emitting X-ray beams X to transferring secondary image data sets is repeated continuously while the rotary device 2 of the CT imaging device 1" is rotated, and secondary image data sets obtained by carrying out CT imaging from different angles are transferred, in sequence, to the image processing circuit 12".

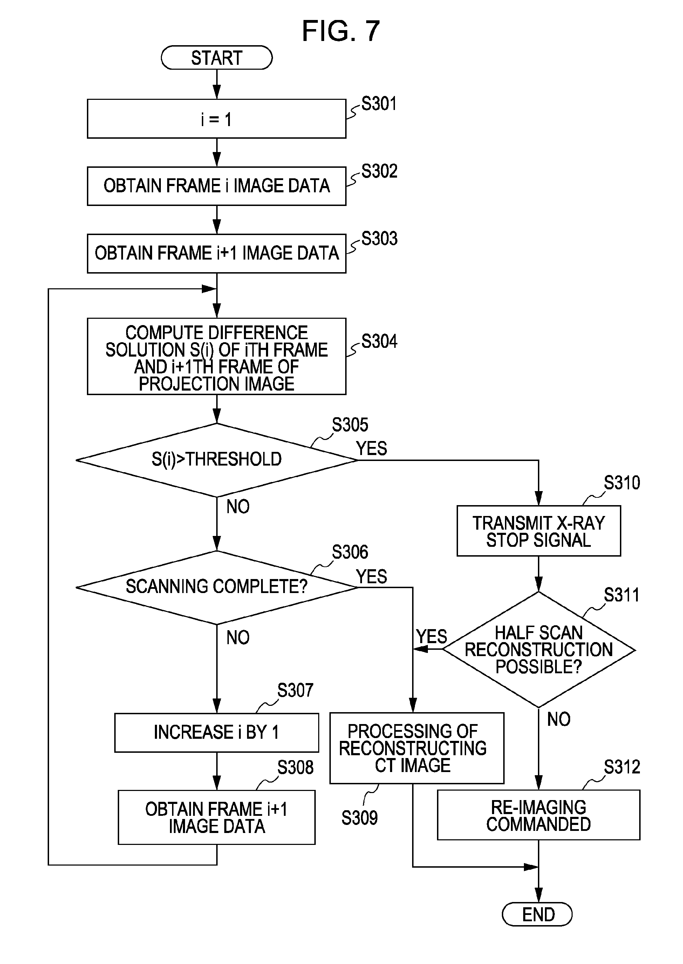

Fig. 7 is a flow chart of the processing carried out by the image processing circuit 12" according to the third embodiment. Similar to the first embodiment, when CT imaging begins, secondary image data sets are obtained in sequence; the difference between the pixel values of the corresponding pixels of two consecutive frames is calculated; and the determination process for determining whether re-imaging is required is carried out repeatedly while CT imaging is being carried out (Steps S301 to S308).

The operation carried out when, in Steps S305, it is determined that re-imaging is required in the third embodiment differs from that in the first embodiment. More specifically, if, in Step S305, it is determined that re-imaging is required, the X-ray generator 3 is deactivated by transmitting an X-ray stop signal from the X-ray stop command circuit 31 to the data collecting circuit 5 via the CPU bus 7 (Step S310). At this time, the rotary device 2 may also be deactivated when the X-ray generator 3 is deactivated.

Next, in Step S310, it is determined whether or not half-scan reconstruction is possible using the secondary image data group obtained before the X-ray emission was stopped (Step S311). It is generally known from the principle of CT image reconstruction that image reconstruction by half-scan is possible if the range of the projection angle of the image corresponding to the obtained secondary image data sets is greater than the sum of 180 degrees and the fan angle of the X ray. The third embodiment employs this generally known concept.

If, in Step S311, it is determined that reconstruction by half-scan is possible, a CT image is reconstructed from the secondary image data sets P1 to Px of the frames by the reconstruction circuit 16 (Step S309). Then, the operation of the image processing circuit 12" is completed. In contrast, if it is determined that reconstruction by half-scan is not possible, a message instructing the operator to carry out re-imaging is displayed on the display monitor 11 (Step S312). Then, the operation of the image processing circuit 12" is completed.

According to the third embodiment, the X-ray emission can be stopped immediately after body movement of the subject S is detected. Therefore, compared to a known method in which whether or not re-imaging is required is determined after scanning, the amount of X-ray exposure to the subject S can be reduced. Moreover, even if the X-ray emission is stopped due to the detection of body movement, so long as reconstruction of the image by half-scan is possible, the CT image can be reconstructed from the secondary image data sets that have already been obtained. Therefore, re-imaging is not required, and, as a result, the burden inflicted on the subject S is reduced, and the throughput of the computerized tomography is improved.

A storage medium storing a software program code for realizing the functions of the apparatuses or systems according to the first to third embodiments may be supplied to another apparatus or system. The functions are realized by reading out and executing the program code stored on the supplied storage medium by a computer (CPU or MPU) included in the apparatus or system supplied with the storage medium. In such a case, the program code read out from the storage medium realizes the functions according to the first to third embodiments, and the storage medium storing the program code and the program code itself constitute an embodiment of the present invention.

The storage medium for supplying the program code may be a read only memory (ROM), a flexible disk, a hard disk, an optical disk, a magnetic optical disk, a compact disk read only memory (CD-ROM), a compact disk readable (CD-R), a magnetic tape, or a non-volatile memory card.

The functions according to the first to third embodiments may be realized by executing the program code read out by the computer so that an operating system (OS) operating on the computer carries out part or all of the actual process according to the program code.

The program code read out from the storage medium can be written in a memory included in a function expansion board installed in the computer or a function expansion unit connected to the computer. After writing in the program code, the functions according to the first to third may be realized by a CPU included in the function expansion board or the function expansion unit carrying out part or all of the actual process according to the program code.

When such a program or a storage medium storing the program is applied to the present invention, the program constitutes a program code, for example, corresponding to the flow chart illustrated in Fig. 3, 5, or 7.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. A radiographic imaging method of reconstructing a computerized tomographic image from a plurality of projected image data sets obtained time-sequentially, the method comprising steps of:

   obtaining, in sequence, image data sets by computerized tomographic imaging (S101, S102, S103);
   analyzing the difference between pixel values of corresponding pixels in two consecutive frames included in the image data sets obtained in sequence in the obtaining step (S104); and
   determining whether or not re-imaging is required by comparing the difference value obtained in the analyzing step with a predetermined threshold value (S105).

2. The method according to Claim 1, further comprising a step of:

   identifying an region of interest in the images of the two consecutive frames (S204).

3. The method according to Claim 1, further comprising a step of:

   setting the threshold value on the basis of a frame rate.

4. The method according to Claim 1, further comprising a step of:

   generating a signal for stopping the X-ray emission on the basis of the determining step (S310).

5. A computer program which when loaded into a computer and executed performs the steps included in the method according to any preceding claim.

6. A radiographic imaging apparatus (1) configured to carry out the process of reconstructing a computer tomographic image from a plurality of image data sets, the apparatus comprising:

   a computer tomographic imaging device (3, 4, 5) configured to obtain image data sets in sequence while computer tomographic imaging is being carried out and to transfer the obtained image data sets to an image processing circuit;
   a differential analysis unit (14) configured to compute a difference value between two consecutive frames included in the obtained image data sets, the frames corresponding to an entire image or a predetermined region of an image;

a threshold setting unit (8) configured to set a threshold value on the basis of an imaging frame rate; and

a re-imaging determining unit (15) configured to determine whether or not re-imaging is required by comparing the difference value for at least one pair of consecutive frames with a predetermined threshold value.

# FIG. 1

1

CPU BUS

3 — X-RAY GENERATOR

X

2

S

2-DIMENSIONAL
X-RAY SENSOR

4

5

DATA COLLECTING
CIRCUIT

6

PRE-
PROCESSING
CIRCUIT

7

8

CPU

9

MAIN MEMORY

10

OPERATION PANEL

11

DISPLAY
MONITOR

12

IMAGE PROCESSING CIRCUIT

13 — SECONDARY IMAGE DATA
ACQUISITION CIRCUIT

14 — INTER-FRAME DIFFERENTIAL
ANALYSIS CIRCUIT

15 — RE-IMAGING
DETERMINATION CIRCUIT

16 — RECONSTRUCTION
CIRCUIT

# FIG. 2

# FIG. 3

START

i = 1  ⌇S101

OBTAIN FRAME i IMAGE DATA  ⌇S102

OBTAIN FRAME i+1 IMAGE DATA  ⌇S103

OBTAIN DIFFERENCE
SOLUTION S(i) OF PIXEL VALUES  ⌇S104
OF CORRESPONDING PIXELS

S105

S(i)>THRESHOLD → YES

NO

S106

SCANNING COMPLETE? → YES

NO

INCREASE i BY 1  ⌇S107

OBTAIN FRAME i+1 IMAGE DATA  ⌇S108

S109

PROCESSING OF
RECONSTRUCTING
CT IMAGE

END

# FIG. 4

# FIG. 5

```
                    ┌─────────────┐
                    │    START    │
                    └──────┬──────┘
                           │
            ┌──────────────────────────────┐  S201
            │           i = 1               │
            └──────────────┬───────────────┘
                           │
            ┌──────────────────────────────┐  S202
            │   OBTAIN FRAME i IMAGE DATA   │
            └──────────────┬───────────────┘
                           │
            ┌──────────────────────────────┐  S203
            │  OBTAIN FRAME i+1 IMAGE DATA  │
            └──────────────┬───────────────┘
                           │
            ┌──────────────────────────────┐  S204
            │         IDENTIFY ROI          │
            └──────────────┬───────────────┘
                           │
            ┌──────────────────────────────┐  S205
            │    COMPUTE THRESHOLD VALUE     │
            └──────────────┬───────────────┘
                           │
            ┌──────────────────────────────┐  S206
            │      OBTAIN DIFFERENCE         │
            │ SOLUTION S(i) OF PIXEL VALUES  │
            │   OF CORRESPONDING PIXELS      │
            └──────────────┬───────────────┘
                           │
                      S207 ◇ S(i)>THRESHOLD ──── YES ───┐
                           │ NO                          │
                      S208 ◇ SCANNING COMPLETE? ── YES ──┤
                           │ NO                          │
            ┌──────────────────────────────┐  S209       │
            │        INCREASE i BY 1         │           S211
            └──────────────┬───────────────┘   ┌──────────────────┐
                           │                    │  PROCESSING OF    │
            ┌──────────────────────────────┐    │ RECONSTRUCTING    │
            │  OBTAIN FRAME i+1 IMAGE DATA  │    │    CT IMAGE       │
            └──────────────┬───────────────┘    └────────┬─────────┘
                  S210      │                             │
                           └─────────────────────────────┤
                                                   ┌──────────┐
                                                   │   END    │
                                                   └──────────┘
```

# FIG. 6

# FIG. 7

START

i = 1 — S301

OBTAIN FRAME i IMAGE DATA — S302

OBTAIN FRAME i+1 IMAGE DATA — S303

COMPUTE DIFFERENCE SOLUTION S(i) OF iTH FRAME AND i+1TH FRAME OF PROJECTION IMAGE — S304

S(i)>THRESHOLD — S305
YES

NO

SCANNING COMPLETE? — S306
YES

NO

INCREASE i BY 1 — S307

OBTAIN FRAME i+1 IMAGE DATA — S308

PROCESSING OF RECONSTRUCTING CT IMAGE
S309

TRANSMIT X-RAY STOP SIGNAL — S310

HALF SCAN RECONSTRUCTION POSSIBLE? — S311
YES

NO

RE-IMAGING COMMANDED — S312

END

**European Patent Office**

**EUROPEAN SEARCH REPORT**

Application Number

EP 06 12 1153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 530 162 A2 (CANON KK [JP]) 11 May 2005 (2005-05-11) * equations 1-3 * * page 5 * * page 6, line 4 - line 9 * * page 8, paragraph 66 * * figure 6 * ----- | 1-6 | INV. G06T11/00 |
| X | US 4 858 128 A (NOWAK DAVID J [US]) 15 August 1989 (1989-08-15) * column 7, line 65 - column 8, line 1; figure 5 * ----- | 1,5,6 | |

TECHNICAL FIELDS SEARCHED (IPC)

G06T

The present search report has been drawn up for all claims

| Place of search | Date of completion of the search | Examiner |
|---|---|---|
| Munich | 8 February 2007 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 12 1153

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2007

| Patent document cited in search report | | Publication date | Patent family member(s) | | Publication date |
|---|---|---|---|---|---|
| EP 1530162 | A2 | 11-05-2005 | JP 2005137472 A<br>US 2005111614 A1 | | 02-06-2005<br>26-05-2005 |
| US 4858128 | A | 15-08-1989 | AU 595881 B2<br>AU 7319787 A<br>DE 3726595 A1<br>FR 2602602 A1<br>GB 2194870 A<br>JP 1944994 C<br>JP 6079343 B<br>JP 63088688 A | | 12-04-1990<br>18-02-1988<br>25-02-1988<br>12-02-1988<br>16-03-1988<br>23-06-1995<br>05-10-1994<br>19-04-1988 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002365239 A
- JP 11151232 A